# EUROPÄISCHE PATENTSCHRIFT

(11) **EP 2 021 654 B1**
(45) Veröffentlichungstag und Bekanntmachung des Hinweises auf die Patenterteilung: **06.01.2010**
(21) Anmeldenummer: 07711443.7
(22) Anmeldetag: 06.02.2007
(51) Int. Cl.: F16H 7/18, F16H 7/08

(54) **SPANNSCHIENE MIT KANALEINRICHTUNG IN DRUCKKÖRPER**
TENSIONING RAIL WITH A CHANNEL DEVICE IN THE PRESSURE BODY
TENDEUR AVEC CANAL DANS LE CORPS DE PRESSION

(30) Priorität: 30.05.2006 DE 202006008573 U
(43) Veröffentlichungstag der Anmeldung: 11.02.2009
(73) Patentinhaber: IWIS Motorsysteme GmbH & Co. KG, 81369 München (DE)
(72) Erfinder: HEINRICH, Dag, 82377 Penzberg (DE); BAUER, Christian, 80993 München (DE); AURNHAMMER, Markus, 81549 München (DE); PERISSINOTTO, Renzo, 85221 Dachau (DE)
(74) Vertreter: Grünecker, Kinkeldey, Stockmair & Schwanhäusser Anwaltssozietät
(86) Internationale Anmeldenummer: PCT/EP2007/001000
(87) Internationale Veröffentlichungsnummer: WO 2007/137635

(56) Entgegenhaltungen:
- DE-A1- 10 344 012
- DE-U1-202004 013 921
- GB-A- 2 254 671
- JP-A- 2004 116 680

## Beschreibung

Die vorliegende Erfindung betrifft eine Spannschiene für einen Kettentrieb, insbesondere Steuerkettentrieb eines Verbrennungsmotors, mit einem Basiskörper und einem mit dem Basiskörper verbundenen Druckkörper, welcher einen Aufdrückbereich zum Aufdrücken eines Kettenspanners bereitstellt. Ferner betrifft die Erfindung eine Spannvorrichtung für ein Endlostreibelement, insbesondere Steuerkette eines Verbrennungsmotors, mit einer an das Endlostreibelement andrückbaren Spannschiene, die einen Basiskörper und einen mit dem Basiskörper verbindbaren, einen Aufdrückbereich bereitstellenden Druckkörper aufweist, und mit einem Kettenspanner, welcher auf den Aufdrückbereich des Druckkörpers aufdrückt.

Spannschienen für Kettentriebe werden vor allem in Kraftfahrzeugmotoren verwendet, bei denen die Nockenwelle über eine Steuerkette angetrieben wird. Um die Kette unter einer definierten Spannung zu halten und um Toleranzen, insbesondere auch ein auftretendes Nachlängen der Kette bei längerem Gebrauch auszugleichen, wird die Kette über eine Spannschiene gespannt, die zumeist durch Federkraft oder hydraulisch angedrückt wird.

Im Allgemeinen werden entsprechende Spannschienen hierbei aus einem Basiskörper mit einem darauf angebrachten Gleitbelag bzw. Gleitbelagkörper gebildet. Die Spannschiene ist an einem Ende schwenkbar angebracht und wird mit ihrem Gleitbelag gegen die Kette gedrückt. In diesem Zusammenhang weist der Basiskörper im Allgemeinen einen Aufdrückbereich zum Aufdrücken eines Kettenspanners auf, welcher zum Beispiel an der dem Gleitbelag abgewandten Seite des Basiskörpers angeordnet sein kann. Der Kettenspanner wird häufig beim Einsatz in einem Verbrennungsmotor an die Motorölversorgung angeschlossen, so dass bei erhöhter Drehzahl auch eine erhöhte Kettenspannung erzeugbar ist.

Aus der DE 20 2004 013 921.9 ist es bekannt, den Aufdrückbereich als separates Druckstück auszugestalten, welche mittels einer Steckrastverbindung mit dem Basiskörper verbindbar ist. Hierdurch kann das Druckstück zum Beispiel nachträglich bei Verschleiß einfach ausgetauscht werden, ohne dass die ganze Spannschiene ersetzt werden muss. Des Weiteren ist es möglich, eine entsprechende Spannschiene insbesondere in beengten Einbauverhältnissen einzusetzen.

Aus Dokument GB 2 254 671, des den nächstliegenden Stand der Technik repräsentiert, ist eine Spannschiene mit den Merkmalen des Oberbegriffs des unabhängigen Anspruchs 1 bekannt.

Die bekannten Spannschienen haben sich in der Praxis bewährt, es bestehen jedoch weiterhin Bestrebungen, die Spannschienen zu verbessem, und insbesondere die Wirkung der Spannschiene im Einsatz zu erhöhen.

Diese Aufgabe wird für eine Spannschiene für einen Kettentrieb, insbesondere Steuerkettentrieb eines Verbrennungsmotors, mit einem Basiskörper und mit einem mit dem Basiskörper verbundenen Druckkörper, welcher einen Aufdrückbereich zum Aufdrücken eines Kettenspanners bereitstellt, dadurch gelöst, dass eine im Einsatz dem Kettenspanner zugewandte Aufdrückfläche des Druckkörpers mit einer Kanaleinrichtung ausgebildet ist.

Die Ausbildung einer Kanaleinrichtung in der Aufdrückfläche des Druckkörpers hat mehrere Vorteile. Zum einen stellt die Kanaleinrichtung eine Entlüftung zur Verfügung, welche im Einsatz mit der Entlüftungsbohrung des Kettenspanners zusammenwirken kann, um so eine sichere Entlüftung gewährleistet. Gleichzeit wird eine akustische Entkoppelung des Spann- und Dämpfungssystems erzielt, weil der Kolben und die Aufdruckfläche aus unterschiedlichen Materialien bestehen. Da der Druckkörper als ein von der Spannschiene trennbares Element hergestellt wird, kann dieser bei Verschleiß einfach ausgetauscht werden, gleichzeitig ist es möglich, verschiedene Druckkörper bereitzustellen, welche mit unterschiedlich ausge-stalteten Kanaleinrichtungen versehen sind, um so je nach Anwendungszweck einen entsprechenden Druckkörper auszuwählen.

Gemäß einer Ausführungsform kann vorgesehen sein, dass sich die Kanaleinrichtung als Nut der Länge nach über die ganze Aufdrückfläche erstreckt. In der Praxis hat sich die Ausbildung einer Nut als besonders einfache Ausführungsform erwiesen, die unter Einsatz bekannter Maschinen gefertigt werden kann, so dass die Herstellungskosten des Druckkörpers gering gehalten werden können. Durch die Ausbildung der Nut über die ganze Aufdrückfläche wird sichergestellt, dass insbesondere im Hinblick auf die Entlüftungsfunktion eine kontinuierliche, ungehinderte Entlüftung gegeben ist.

Vorteilhafterweise kann die Nut entlang einer Mittellinie der Aufdrückfläche ausgebildet sein. Diese Ausführungsform sorgt dafür, dass die Ausbildung der Nut die Festigkeit des Druckkörpers nicht nachteilig beeinflusst, gleichzeitig erleichtert es die Ausrichtung der Entlüftungsöffnung des Kettenspanners relativ zu der Nut.

Weiterhin kann die Aufdruckfläche konkav ausgebildet sein. Gemäß einer anderen Ausführungsform kann die Aufdruckfläche konvex ausgebildet sein. Ein entsprechend ausgebildeter Druckkörper eignet sich für verschiedenste Einsatzgebiete, d.h. sowohl in einem beengten Einsatz als auch bei Einsätzen mit mehr Platz. Je nach der gewünschten Anwendung kann hier eine konkave oder eine konvexe Andrückfläche ausgewählt werden, abhängig davon, wie groß die Kontaktfläche zwischen dem Druckkörper und dem Kettenspanner sein soll. Gemäß anderer bevorzugter Ausführungsformen kann die Aufdruckfläche auch quadratisch, rund, rechteckig und eben ausgebildet sein.

Gemäß einer weiteren bevorzugten Ausführungsform kann der Druckkörper mit dem Basiskörper verrasten. Eine Rastverbindung stellt eine sehr einfache Verbindungsmöglichkeit zwischen dem Basiskörper und dem Druckkörper bereit, wobei eine entsprechende Rastverbindung lösbar oder unlösbar ausgestaltet werden kann. Je nach Ausgestaltung der Rastverbindung kann hier eine Montage ohne Werkzeuge erfolgen, so dass die Herstellungskosten gering sind.

Vorteilhafterweise kann der Druckkörper an der der **Aufdruckfläche** gegenüberliegenden Seite mit wenigstens einem Rastelement versehen sein. Die Ausbildung eines entsprechenden Rastelementes an der der Aufdruckfläche gegenüberliegenden Seite hat sich als besonders vorteilhaft erwiesen, da hierdurch eine besonders einfache Verbindung des Druckkörpers mit dem Basiskörper erzielt wird, indem die Verrastung im Inneren der Spannschiene oder außerhalb der Spannschiene bewirkt werden kann.

Vorteilhafterweise kann das Rastelement ein Stegelement und eine von diesem abgewinkelte Rastnase umfassen, welche sich nach außen erstreckt. Hierdurch wird eine Verrastung im Inneren des Basiskörpers bewirkt, wobei sich die Rastnasen in dazu ausgebildete Eingriffsöffnungen im Inneren der Spannschiene eingreifen. Dabei können die Eingriffsöffnungen als Durchgriffsöffnung ausgebildet sein, um hierdurch ein Lösen des Rastelementes zu gewährleisten. Wenn das Stegelement und die Rastnase im Inneren des Basiskörpers angeordnet ist, wird hierdurch ein Schutz für die Stegelemente bereitgestellt, wodurch sich die Haltbarkeit der Verbindung erhöht.

Obwohl der Druckkörper und der Basiskörper aus dem gleichen Material gefertigt sein können, ist bevorzugt, dass der Druckkörper aus einem anderen Material gefertigt ist. Hierdurch ist es möglich, die verschiedenen Materialien für den Druckkörper wie auch für den Basiskörper aufgrund der speziellen gewünschten Eigenschaften unabhängig voneinander auszuwählen. Auf diese Weise kann die Festigkeit der Spannschiene weiter erhöht werden.

Vorteilhafterweise kann auch der Druckkörper aus einem Material gefertigt sein, gewählt aus der Gruppe der verschleißfesten Werkstoffe, dämpfenden Werkstoffe und Werkstoffe mit niedrigen Reibungskoeffizienten, sowie Kombinationen dieser. In der Praxis haben sich diese Werkstoffe als besonders geeignet erwiesen.

Vorteilhafterweise kann auch der Druckkörper aus unterschiedlichen Materialien gefertigt sein, d.h. der Bereich des Stegelementes und der Rastnase sowie ein Teil des Aufdruckbereiches kann aus einem anderen Material bestehen als die Aufdrückfläche. Gleichermaßen kann das Stegelement nebst Rastnase aus einem anderen Material gefertigt sein als der Druckkörper selbst. Auch hierdurch wird es möglich, spezielle Eigenschaften insbesondere im Bereich der Aufdrückfläche zu erzielen und hierbei können unter anderem Materialien eingesetzt werden, deren Kosten den Einsatz für den gesamten Druckkörper ausschließen.

Die Aufgabe der Erfindung wird ferner durch eine Spannvorrichtung für ein Endlostreibelement, insbesondere Steuerkette eines Verbrennungsmotors, mit einer an das Endlostreibelement andrückbaren Spannschiene, die einen Basiskörper und einen mit dem Basiskörper verbindbaren, einen Aufdrückbereich bereitstellenden Druckkörper aufweist, und mit einem Kettenspanner, welcher auf den Aufdrückbereich des Druckkörpers aufdrückt, dadurch gelöst, dass eine Aufdrückfläche des Druckkörpers mit Kanaleinrichtungen ausgebildet ist, welche im Einsatz eine Entlüftungsöffnung des Kettenspanners zugeordnet ist. Da die Entlüftungsöffnung des Kettenspanners im Einsatz unmittelbar auf der Kanaleinrichtung angeordnet ist, kann hier eine kontinuierliche problemlose Entlüftung sichergestellt werden. Die Ausbildung der Kanaleinrichtung stellt hierbei eine einfache und kostengünstige Maßnahme bereit. Der Ausdruck "zugeordnet" bedeutet, dass die Entlüftungsöffnung des Kettenspanners im Bereich der Kanaleinrichtung angeordnet ist, bzw. so auf der Kanaleinrichtung aufliegt, dass die Entlüftungsöffnung direkten Zugang zur Kanaleinrichtung hat und der Kettenspanner selbst auf die Aufdrückfläche rechts und links neben der Kanaleinrichtung aufdrückt.

Vorteilhafterweise kann die Spannschiene hier wie oben beschrieben ausgebildet sein.

Weiterhin kann die Breite der Kanaleinrichtung im Wesentlichen dem Durchmesser der Entlüftungsöffnung des Kettenspanners entsprechen. Auch hierdurch wird eine ungehinderte Entlüftung gewährleistet, ohne dass die Aufdrückkraft des Kettenspanners reduziert wird.

Gemäß einer weiteren bevorzugten Ausführungsform umfasst der Kettenspanner einen Spannkolben, in welchem die Entlüftungsöffnung stirnseitig angeordnet ist. Entsprechende Kettenspanner haben sich in der Praxis bereits bewährt und werden vielfältig eingesetzt.

Im Folgenden wird ein Ausführungsbeispiel der vorliegenden Erfindung anhand einer Zeichnung näher erläutert. Es zeigen:
- Fig. 1: eine perspektivische Ansicht eines efindungsgemäßen Druckkörpers, und
- Fig. 2: eine perspektivische Ansicht eines erfindungsgemäßen Druckkörpers gemäß einer weiteren Ausführungsform
- Fig. 3: einen Schritt entlang der Linie A-A aus Fig. 1 und
- Fig.4: eine Übersichtsskizze, welche die erfindungsgemäße Spannschiene im Einsatz zeigt.

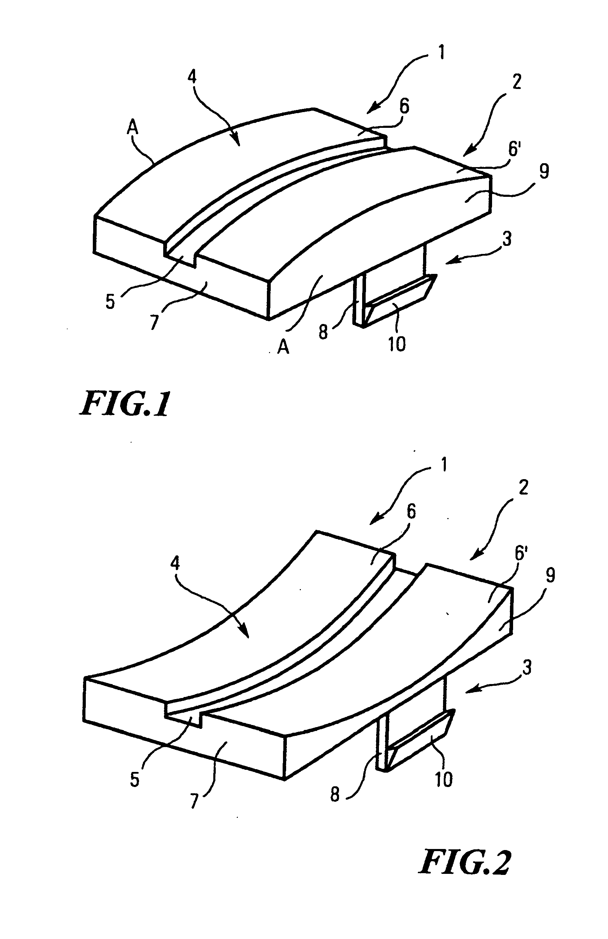

Der in den Figuren 1 bis 3 dargestellte Druckkörper 1 umfasst einen Aufdrückbereich 2 sowie einen Verbindungs- bzw. Rastbereich 3, die miteinander verbunden sind. Der Aufdrückbereich 2 weist hierbei die Aufdrückfläche 4 auf, auf welche im Einsatz der Kettenspanner aufdrückt. An der der Aufdrückfläche 4 gegenüberliegenden Seite des Aufdrückbereichs 2 ist der Verbindungs- bzw. Rastbereich 3 ausgebildet.

Im Bereich der Aufdrückfläche 4 ist eine Nut 5 ausgebildet, welche die Aufdrückfläche 4 in zwei Teilelemente unterteilt. Die Nut 5 erstreckt sich hierbei über die ganze Länge der Aufdrückfläche 4, d.h. von einer Seite bis zu der gegenüberliegenden Seite und mündet jeweils in den sich gegenüberliegenden Seitenflächen 7 des Druckkörpers 2. Die Seitenflächen 7 entsprechen hierbei den an den kürzeren Seiten der Aufdrückfläche 4 angeordneten in etwa senkrechten Seitenfläche. Ferner ist die Nut gerade ausgebildet und verläuft in etwa in einer Linie zur Mittellinie der Aufdrückfläche 4, so dass die Aufdrückfläche 4 in zwei in etwa gleich große Teilflächen unterteilt wird. Jede dieser Teilflächen bildet ein Entkopplungselement 6,6', durch welche eine akustische Entkopplung erzielt wird.

Vorzugsweise wird die Nut mit einer Breite ausgebildet, welche geringer als die Hälfte der Breite eines Teilelementes der Aufdrückfläche 4 ist, vorzugsweise in etwa 40 % dieser Breite beträgt. Die Tiefe der Nut entspricht in etwa einem Drittel der Höhe des Aufdrückbereichs, gemessen an den Seitenflächen 7 des Aufdrückbereichs, in welchen die Nut 5 mündet.

Wie aus den Figuren 1 und 2 deutlich wird, weist die Aufdrückfläche 4 in der Aufsicht einen in etwa rechteckigen Umriss auf, wobei die Aufdrückfläche selbst jedoch gewölbt ausgebildet ist, entweder wie in Figur 1 dargestellt konkav oder wie in Figur 2 dargestellt ist konvex. Die Wölbung ist hierbei in der gleichen Richtung wie die Nut ausgeführt, d.h. in Richtung der längeren Seite der Aufdrückfläche 4. Die Nut erstreckt sich über die gesamte Aufdrückfläche mit der gleichen Tiefe und der gleichen Breite.

An der der Aufdrückfläche 4 gegenüberliegenden Seite ist, wie bereits ausgeführt, ein Befestigungselement 3 ausgebildet. Dieses Befestigungselement ist in Form von Rastelementen ausgebildet, wobei in Figur 1 und 2 jeweils nur ein Rastelement dargestellt ist. Ein gegengleich ausgebildetes Rastelement ist an der gegenüberliegenden Seite des Aufdrückbereichs angeordnet. Jedes Rastelement umfasst hierbei einen Steg 8, welcher sich in etwa senkrecht von dem Aufdrückbereich nach unten erstreckt. Hierbei ist der Steg 8 nicht unmittelbar an der Kante des Aufdrückbereichs sondern um einen vorbestimmten Abstand zu den jeweiligen Seitenflächen des Aufdrückbereiches beabstandet angeordnet.

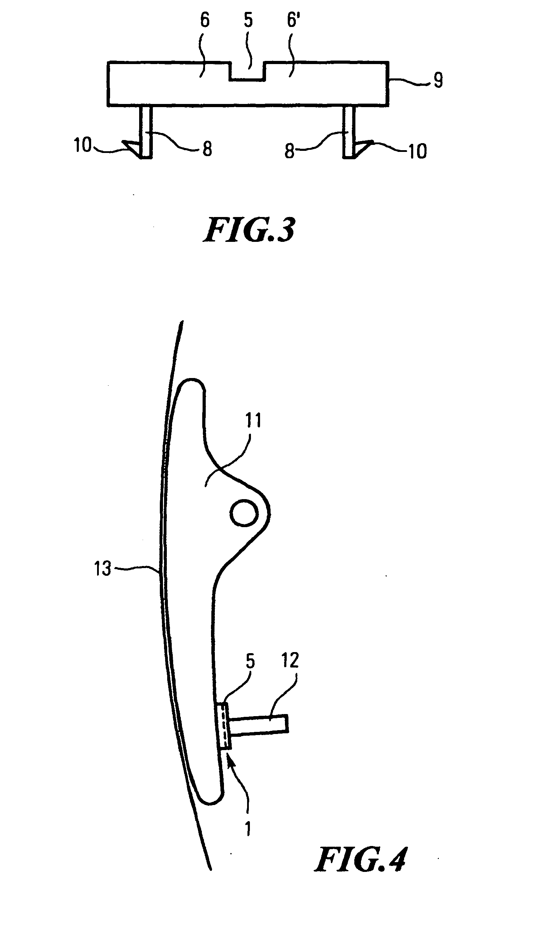

Figur 3 zeigt einen Schnitt entlang der Linie A-A aus Figur 1 des erfindungsgemäßen Druckkörpers mit Rastelementen gezeigt, wobei insbesondere die Anordnung der Rastelemente dargestellt sind.

Der Abstand der Stege 8 von den Seitenflächen 9 entspricht hierbei in etwa der Breite der jeweiligen Basiskörperstege, in welche der Druckkörper 1 eingesetzt wird. Jedes Stegelement 8 umfasst eine von dem Stegelement abgewinkelte Rastnase 10, welche sich von dem Stegelement 8 nach außen, d.h. in Richtung der längeren Seitenflächen 9 erstreckt. Bei der dargestellten Ausführungsform sind die Rastnasen 10 als Winkelelemente ausgebildet, welche sich zu dem Aufdrückbereich 2 hin erstrecken und an ihrer Spitze verjüngt ausgebildet sind.

Gemäß einer anderen Ausführungsform kann auch ein einzelnes Stegelement 8 in der Mitte des Aufdrückbereichs ausgebildet sein, wobei sich dann beidseitig von dem Stegelement aus Rastnasen nach außen erstrecken.

Bei der Montage wird der Druckkörper solchermaßen mit dem Basiskörper verbunden, dass die Stege sich in das Innere des Basiskörpers erstrecken und die Rastnasen von entsprechend ausgebildeten Aufnahmeöffnungen aufgenommen werden.

Es ist jedoch auch möglich, die Rastelemente solchermaßen auszubilden, dass sie den Basiskörper von außen umgreifen.

In Fig. 4 zeigt die erfindungsgemäße Spannschiene umfassend den Basiskörper 11 sowie den mit diesem verbundenen Druckkörper 1 im Einsatz. Der Druckkörper entspricht hierbei dem in Fig. 2 dargestellten Druckkörper 1.

Die Spannschiene wird hierbei mittels eines Kettenspanners 12 gegen eine Kette, insbesondere Steuerkette 13 gedrückt. Der Kettenspanner drückt hierbei gegen die Auflagefläche 4 des Druckkörpers und ist solchermaßen auf der Auflagefläche angeordnet, dass eine stirnseitig in dem Kolben des Kettenspanners ausgebildete Entlüftungsöffnung im Bereich der Nut 5 des Druckkörpers angeordnet ist.

## Patentansprüche

1. Spannschiene für einen Kettentrieb, insbesondere Steuerkettentrieb eines Verbrennungsmotors, mit einem Basiskörper (11) und einem mit dem Basiskörper (11) verbundenen Druckkörper (1), welcher einen Aufdrückbereich (2) zum Aufdrücken eines Kettenspanners (12) bereitstellt, **dadurch gekennzeichnet, dass** eine im Einsatz dem Kettenspanner (12) zugewandte und mit diesem in Berührung kommende Aufdrückfläche (4) des Druckkörpers (1) mit einer als Nut (5) ausgebildeten und eine Entlüftung bereitstellenden Kanaleinrichtung versehen ist.

2. Spannschiene nach Anspruch 1, **dadurch gekennzeichnet, dass** sich die Kanaleinrichtung als Nut (5) der Länge nach über die ganze Aufdrückfläche (4) erstreckt.

3. Spannschiene nach Anspruch 2, **dadurch gekennzeichnet, dass** die Nut (5) entlang einer Mittellinie der Aufdrückfläche (4) ausgebildet ist.

4. Spannschiene nach einem der Ansprüche 1 bis 3, **dadurch gekennzeichnet, dass** die Aufdrückfläche konkav ausgebildet ist.

5. Spannschiene nach einem der Ansprüche 1 bis 3, **dadurch gekennzeichnet, dass** die Aufdrückfläche (4) konvex ausgebildet ist.

6. Spannschiene nach einem der Ansprüche 1 bis 5, **dadurch gekennzeichnet, dass** der Druckkörper (1) mit dem Basiskörper verrastet.

7. Spannschiene nach einem der Ansprüche 1 bis 5, **dadurch gekennzeichnet, dass** der Druckkörper (1) an der der Aufdrückfläche (4) gegenüberliegenden Seite mit wenigstens einem Rastelement (3) versehen ist.

8. Spannschiene nach Anspruch 7, **dadurch gekennzeichnet, dass** das Rastelement (3) ein Stegelement (8) und wenigstens eine von diesem abgewinkelte Rastnase (10) umfasst, welche sich nach außen erstreckt.

9. Spannschiene nach einem der Ansprüche 1 bis 8, **dadurch gekennzeichnet, dass** der Druckkörper (1) aus einem anderen Material als der Basiskörper (11) gefertigt ist.

10. Spannschiene nach einem der Ansprüche 1 bis 9, **dadurch gekennzeichnet, dass** der Druckkörper (1) aus einem Material gefertigt ist, gewählt aus der Gruppe der verschleißfesten Werkstoffe, dämpfenden Werkstoffe und Werkstoffe mit niedrigem Reibungskoeffizienten sowie Kombinationen dieser.

11. Spannschiene nach einem der Ansprüche 1 bis 10, **dadurch gekennzeichnet, dass** die Aufdrückfläche (4) aus einem anderen Material als der Aufdrückbereich (2) besteht.

12. Spannvorrichtung für ein Endlostreibelement, insbesondere Steuerkette eines Verbrennungsmotors, mit einer an das Endlostreibelement andrückbaren Spannschiene nach einem der Ansprüche 1 bis 11 und mit einem Kettenspanner (12), welcher auf den Aufdrückbereich (2) des Druckkörpers (1) aufdrückt, wobei im Einsatz eine Entlüftungsöffnung des Kettenspanners (12) auf der Kanaleinrichtung angeordnet sind.

13. Spannvorrichtung nach Anspruch 12, **dadurch gekennzeichnet, dass** die Breite der Kanaleinrichtung im Wesentlichen dem Durchmesser der Entlüftungsöffnung des Kettenspanners (12) entspricht.

14. Spannvorrichtung nach Ansprüche 12 oder 13, **dadurch gekennzeichnet, dass** der Kettenspanner (12) einen Spannkolben umfasst, dessen stirnseitiges Ende die Entlüftungsöffnung aufweist.

## Claims

1. Tensioning rail for a chain drive, in particular control chain drive of an internal combustion engine, with a base body (11) and a pressure body (1) which is connected to the base body (11) and provides a press-on region (2) for the pressing on of a chain tensioner (12), **characterized in that** a press-on surface (4) of the pressure body (1), which press-on surface faces the chain tensioner (12) during use and comes into contact therewith, is provided with a channel device which is designed as a groove (5) and provides venting.

2. Tensioning rail according to Claim 1, **characterized in that** the channel device extends in length in the form of a groove (5) over the entire press-on surface (4).

3. Tensioning rail according to Claim 2, **characterized in that** the groove (5) is formed along a centre line of the press-on surface (4).

4. Tensioning rail according to one of Claims 1 to 3, **characterized in that** the press-on surface is of concave design.

5. Tensioning rail according to one of Claims 1 to 3, **characterized in that** the press-on surface (4) is of convex design.

6. Tensioning rail according to one of Claims 1 to 5, **characterized in that** the pressure body (1) latches to the base body.

7. Tensioning rail according to one of Claims 1 to 5, **characterized in that** the pressure body (1) is provided with at least one latching element (3) on the side opposite the press-on surface (4).

8. Tensioning rail according to Claim 7, **characterized in that** the latching element (3) comprises a web element (8) and at least one latching lug (10) which is angled from the latter and extends outwards.

9. Tensioning rail according to one of Claims 1 to 8, **characterized in that** the pressure body (1) is manufactured from a different material than the base body (11).

10. Tensioning rail according to one of Claims 1 to 9, **characterized in that** the pressure body (1) is manufactured from a material selected from the group of wear-resistant materials, damping materials and materials having a low coefficient of friction, and also combinations thereof.

11. Tensioning rail according to one of Claims 1 to 10, **characterized in that** the press-on surface (4) is composed of a different material than the press-on region (2).

12. Tensioning device for an endless driving element, in particular control chain of an internal combustion engine, with a tensioning rail, according to one of Claims 1 to 11, which can be pressed onto the endless driving element, and with a chain tensioner (12) which presses onto the press-on region (2) of the pressure body (1), a venting opening of the chain tensioner (12) being arranged on the channel device during use.

13. Tensioning device according to Claim 12, **characterized in that** the width of the channel device substantially corresponds to the diameter of the venting opening of the chain tensioner (12).

14. Tensioning device according to Claim 12 or 13, **characterized in that** the chain tensioner (12) comprises a tensioning piston, the end face of which has the venting opening.

## Revendications

1. Glissière de tension pour transmission par chaîne, en particulier une commande à chaîne de distribution d'un moteur à combustion, comprenant un corps de base (11) et un corps de pression (1) raccordé au corps de base (11) et qui offre une zone d'application (2) pour appliquer un tendeur de chaîne (12), **caractérisée en ce qu'**une surface d'application (4) du corps de pression (1) tournée en service vers le tendeur de chaîne (12) et venant en contact avec celui-ci est pourvue d'un dispositif à canal conformé en rainure (5) et assurant une aération.

2. Glissière de tension selon la revendication 1, **caractérisée en ce que** le dispositif à canal s'étend sous la forme d'une rainure (5), dans le sens de la longueur, sur toute la surface d'application (4).

3. Glissière de tension selon la revendication 2, **caractérisée en ce que** la rainure (5) est formée le long d'une ligne médiane de la surface d'application (4).

4. Glissière de tension selon l'une quelconque des revendications 1 à 3, **caractérisée en ce que** la surface d'application se présente sous une forme concave.

5. Glissière de tension selon l'une quelconque des revendications 1 à 3, **caractérisée en ce que** la surface d'application (4) se présente sous une forme convexe.

6. Glissière de tension selon l'une quelconque des revendications 1 à 5, **caractérisée en ce que** le corps de pression (1) s'enclenche avec le corps de base.

7. Glissière de tension selon l'une quelconque des revendications 1 à 5, **caractérisée en ce que** le corps de pression (1) est doté d'au moins un élément d'encliquetage (3) sur le côté opposé à la surface d'application (4).

8. Glissière de tension selon la revendication 7, **caractérisée en ce que** l'élément d'encliquetage (3) comprend une aile (8) et au moins un nez d'encliquetage (10) formant un coude avec celle-ci et qui s'étend vers l'extérieur.

9. Glissière de tension selon l'une quelconque des revendications 1 à 8, **caractérisée en ce que** le corps de pression (1) est formé d'un autre matériau que le corps de base (11).

10. Glissière de tension selon l'une quelconque des revendications 1 à 9, **caractérisée en ce que** le corps de pression (1) est formé d'un matériau choisi dans le groupe constitué des matériaux résistant à l'usure, des matériaux amortisseurs et des matériaux de faible coefficient de frottement, ainsi que de leurs combinaisons.

11. Glissière de tension selon l'une quelconque des revendications 1 à 10, **caractérisée en ce que** la surface d'application (4) est constituée d'un autre matériau que la zone d'application (2).

12. Dispositif de tension pour un élément d'entraînement sans fin, en particulier une chaîne de distribution d'un moteur à combustion, comprenant une glissière de tension selon l'une quelconque des revendications 1 à 11 qui peut être pressée contre l'élément d'entraînement sans fin et un tendeur de chaîne (12), qui s'appuie sur la zone d'application (2) du corps de pression (1), une ouverture d'aération du tendeur de chaîne (12) étant ménagée en service sur le dispositif à canal.

13. Dispositif de tension selon la revendication 12, **caractérisé en ce que** la largeur du dispositif à canal correspond sensiblement au diamètre de l'ouverture d'aération du tendeur de chaîne (12).

14. Dispositif de tension selon la revendication 12 ou 13, **caractérisé en ce que** le tendeur de chaîne (12) comprend un piston tendeur, dont l'extrémité frontale présente l'ouverture d'aération.
